# FASCICULE DE BREVET EUROPEEN

(11) **EP 0 755 842 B1**
(45) Date de publication et mention de la délivrance du brevet: **29.03.2000**
(21) Numéro de dépôt: 96401668.7
(22) Date de dépôt: 25.07.1996
(51) Int. Cl.: B62D 1/18

(54) **Système de guidage et de verrouillage pour colonne de direction de véhicule automobile**
System zur Führung und Verriegelung für eine Kraftfahrzeuglenksäule
Guiding and locking system for a steering column of a motor vehicle

(30) Priorité: 26.07.1995 FR 9509109
(43) Date de publication de la demande: 29.01.1997
(73) Titulaire: LEMFORDER NACAM S.A., 41100 Vendome (FR)
(72) Inventeur: Fevre, Laurent, 41000 Saint-Sulpice (FR); Bodin, Jean-Christophe, 41100 Saint-Ouen (FR)
(74) Mandataire: Michelet, Alain

(56) Documents cités:
- EP-A- 0 529 769
- EP-A- 0 600 700
- GB-A- 2 113 629
- GB-A- 2 279 728
- US-A- 5 338 064

## Description

La présente invention concerne les colonnes de direction de véhicules automobiles. Elle a plus particulièrement pour objet une telle colonne équipée d'un système de guidage et de verrouillage, telle que définie dans le préambule de la revendication 1 et connue par exemple de GB-A-2 113 629.

Pour que le conducteur d'une voiture puisse avoir plus de confort et d'aisance, les colonnes de direction modernes sont munies de systèmes permettant le réglage en hauteur et en profondeur du volant.

Ce système de réglage pose des problèmes de maintien du corps de colonne, en cas de choc. L'axe de la colonne peut alors être brusquement dévié à cause du dispositif de réglage en hauteur. Cette situation, dangereuse pour le conducteur, diminue également l'efficacité de moyens d'absorption d'énergie équipant la colonne et/ou le véhicule.

Cet aspect est encore plus important lorsqu'est utilisé un coussin gonflable de sécurité, du type couramment dénommé "air bag". Ce genre de dispositif contribue largement à diminuer la gravité du choc en répartissant au mieux l'effort du volant sur le thorax du conducteur. Cependant, pour être pleinement efficace, il doit être accompagné d'un maintien de l'axe de colonne dans la position choisie.

Il est donc hautement désirable que le système de réglage soit combiné à des moyens de maintien de la colonne.

On a déjà proposé des dispositifs pour tenter d'apporter une solution à ce problème. Dans l'un d'entre eux, une partie mobile liée rigidement au corps de colonne est guidée par rapport à une partie fixe liée rigidement au châssis du véhicule et des moyens de fixation permettent de solidariser les deux parties, grâce à l'application de pressions.

Des dispositifs de ce genre s'avèrent cependant insuffisants pour résister à des sollicitations élevées, en particulier lors d'un choc.

Un autre dispositif de guidage avec verrouillage a été proposé dans le document FR-2.599.697. Il décrit un dispositif de réception supportant la colonne de direction, au moyen d'un arbre d'appui traversant deux plaques de réception solidaires du châssis et placées l'une en regard de l'autre latéralement par rapport au corps de colonne. Le corps est réglable en profondeur et en hauteur, le long de trous oblongs pratiqués dans les plaques réceptrices. Ces plaques réceptrices comportent des ouvertures rectangulaires et sont respectivement associées à deux plaques d'arrêt pourvues respectivement de deux trous oblongs orthogonaux. Les plaques réceptrices et les plaques d'arrêt sont munies de dentures mutuellement en prise, qui assurent le verrouillage de la colonne lorsque les pièces sont resserrées les unes contre les autres, le long de l'arbre d'appui.

L'inconvénient de ce dispositif réside en ce qu'il ne permet pas d'assurer de manière fiable le déverrouillage du système de positionnement. Il est néanmoins essentiel de réaliser ce déverrouillage pour pouvoir guider le corps de colonne lors du réglage de celle-ci.

Le document EP-A-0.529.769 décrit un dispositif de verrouillage pour un assemblage de colonne de direction ajustable. Ce dispositif comporte un premier et un second disques s'engageant l'un dans l'autre, chacun étant muni de zones dentées passant à travers des fenêtres de l'autre disque. Les zones dentées de l'un des deux disques s'engagent dans une zone dentée d'un support de montage solidaire du châssis, tandis que les zones dentées du second disque s'engagent dans une forme dentée solidaire du corps de colonne. Un ressort est interposé entre les deux disques pour les séparer, permettant de rétracter les zones dentées dans les fenêtres correspondantes, et donc de les désengager.

Le document EP-A-0.600.700 concerne un mécanisme de verrouillage de colonne de direction.

Le document GB-A-2.279.728 décrit un élément antifriction monté entre des composantes coulissantes d'une colonne de direction ajustable.

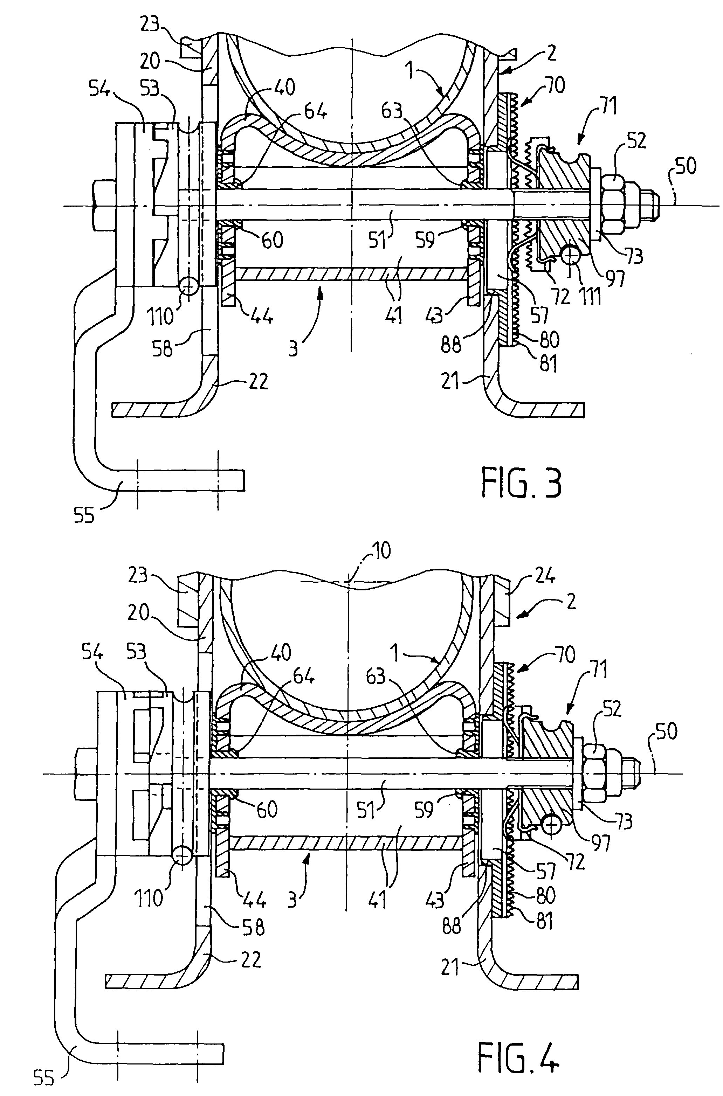

Le document GB-A-2.113.629 concerne un montage pour une colonne de direction ajustable comprenant un support, un élément monté dans le support et recevant une partie de colonne et des moyens de fixation support à l'élément. L'élément et le support ont des surfaces de verrouillage pourvues de dentures coopérant mutuellement. Des blocs de verrouillage sont interposés entre les surfaces de verrouillage. Ces blocs de verrouillage comportent deux rondelles élastiques et une rondelle plate (Figure 3), les rondelles élastiques permettant d'obtenir un écartement des dentures dans une position déverrouillée, de manière à permettre un mouvement relatif de l'élément par rapport au support.

Le but de la présente invention est un système de guidage et de verrouillage d'une colonne de direction combinant un blocage résistant avec un guidage aisé du corps de colonne.

Un autre but de l'invention est de permettre de faire passer la colonne d'une position verrouillée à une position déverrouillée, et réciproquement, grâce à une réalisation et un montage simples et peu coûteux.

Un autre objet de l'invention est un système de guidage et de verrouillage d'une colonne de direction de véhicule automobile, à laquelle est associé un coussin gonflable de sécurité, ce système assurant un maintien de la colonne dans sa direction axiale en cas de choc, tout en permettant de modifier facilement cette direction pour l'adapter aux besoins du conducteur. Un positionnement correct du coussin, c'est-à-dire sensiblement dans l'axe de la colonne et au niveau du thorax du conducteur, peut ainsi être assuré malgré d'importantes sollicitations.

L'invention est applicable à une colonne de direction pour véhicule automobile comportant:
- un corps de colonne s'étendant sensiblement dans le sens longitudinal du véhicule,
- une partie fixe liée rigidement au châssis du véhicule et comprenant deux premières pattes situées de chaque côté du corps de colonne,
- une partie mobile liée rigidement au corps de colonne et comprenant deux secondes pattes latérales coopérant respectivement avec les premières pattes, de manière que la partie mobile puisse avoir un déplacement limité par rapport à la partie fixe, et
- un système de guidage et de verrouillage permettant de positionner et de fixer la partie mobile par rapport à la partie fixe.

Ce système de guidage et de verrouillage comporte:
- au moins une pièce fixe crantée solidaire d'une des pattes de la partie fixe,
- au moins une pièce mobile crantée reliée à la partie mobile et disposée en vis-à-vis de la pièce fixe,
- des moyens de fixation permettant de solidariser les parties mobile et fixe en position verrouillée, dans laquelle les crans des deux pièces coopèrent par conjugaison de forme.

Un moyen élastique est prévu entre les pièces fixes et mobiles crantées, de manière à être comprimé par les éléments de fixation en position verrouillée et à provoquer l'écartement de ces pièces lorsque les éléments de fixation sont mis hors d'action, ce qui correspond à une position déverrouillée, dans laquelle la partie mobile peut se déplacer par rapport à la partie fixe.

La présence d'un moyen élastique interposé entre les pièces fixe et mobile assure que, lorsque la pression exercée pour bloquer le corps de colonne cesse d'être appliquée, un jeu suffisant est généré automatiquement entre les pièces crantées et rend possible leur déplacement relatif sans entrave. La solidité du verrouillage va donc de pair avec la facilité du guidage de positionnement.

Selon l'invention, la colonne de direction comprend les caractéristiques mentionnées dans la partie caractérisante de la revendication 1.

Dans une première forme de réalisation préférée de la colonne de direction, au moins une des pièces fixes comporte au moins une piste s'étendant dans une direction sensiblement parallèle à la direction de déplacement de la partie mobile par rapport à la partie fixe. Le moyen élastique comporte alors au moins une patte capable de glisser sur cette piste et est solidaire de la pièce mobile associée à cette pièce fixe. De cette façon, le moyen élastique assure à la fois la fonction d'écartement élastique des pièces crantées et celles de guidage et d'orientation de ces pièces l'une par rapport à l'autre.

Grâce à cette triple fonction d'écartement, de guidage et d'orientation, le moyen élastique joue un rôle essentiel dans le bon fonctionnement du système de guidage et de verrouillage. Son action rend possible le coulissement de la partie mobile dans la partie fixe sans intervention extérieure, avec un contrôle de la direction de réglage.

Dans cette première forme de réalisation préférée, la piste étant disposée selon une surface plane, elle est avantageusement bordée par au moins un rebord en biais par rapport à cette surface plane, constituant une surface de guidage.

D'autre part, avantageusement, la pièce mobile comporte au moins une encoche et le moyen élastique comporte une languette insérable dans cette encoche, cette insertion permettant de solidariser la pièce mobile avec le moyen élastique et de lui assurer un positionnement précis par rapport à la pièce fixe.

Dans une seconde forme de réalisation avantageuse de la colonne de direction, au moins une des pièces mobiles comporte au moins une piste s'étendant dans une direction de déplacement de la partie mobile par rapport à la partie fixe. Le moyen élastique comporte au moins une patte capable de glisser sur cette piste, et le système de guidage et de verrouillage comporte des moyens d'appui de cette pièce mobile contre le moyen élastique en position déverrouillée. De la sorte, comme dans la première forme de réalisation, le moyen élastique assure à la fois la fonction d'écartement élastique, et de guidage de ces pièces l'une par rapport à l'autre.

Selon un mode de réalisation préféré de l'invention, les moyens de fixation comprennent une tige s'étendant dans une direction transversale à l'axe de colonne en passant à travers des ouvertures des parties fixe et mobile. Des éléments de serrage sont disposés à chacune des extrémités de la tige et permettent, lorsqu'ils sont actionnés, de resserrer les pattes de la partie fixe contre les pattes adjacentes de la partie mobile.

Un tel mode de réalisation peut en outre comporter les caractéristiques suivantes, séparément ou en combinaison:
- les ouvertures de la partie fixe ont une forme oblongue, la tige coulissant dans ces ouvertures en position déverrouillée en entraînant la partie mobile et étant immobilisée en position verrouillée correspondant à l'engrènement des pièces crantées.
- les ouvertures de la partie mobile ont une forme oblongue.
- au moins une des pièces mobiles est fixée à une des extrémités de la tige, la pièce fixe et la patte de la partie fixe correspondantes étant interposées entre cette pièce mobile et une des pattes de la partie mobile.

Dans un mode de réalisation correspondant à ce dernier montage, la tige étant une vis et les éléments de serrage comportant un écrou, cet écrou coopère de préférence avec la pièce mobile avec interposition d'un moyen anti-friction.

Le moyen anti-friction est avantageusement une rondelle, constituée ou revêtue d'un matériau anti-friction, ou bien une butée à billes ou à aiguilles.

Le moyen anti-friction peut également être un élément de toute autre forme qu'une rondelle (rectangulaire, ovale, polyédrique, etc.....), constitué ou revêtu d'un matériau anti-friction.

Toujours dans ce mode de réalisation préféré, les éléments de serrage peuvent comporter une came, une contre-came et un levier de manoeuvre disposés à une des deux extrémités de la tige, les pièces crantées étant disposées à l'autre extrémité. La came et la contre-came peuvent être amenées à coopérer sous l'action du levier de manoeuvre, pour faire passer la colonne de la position déverrouillée à la position verrouillée et inversement.

Dans la colonne de direction selon l'invention, il est avantageux que des patins soient interposés entre les pattes adjacentes des parties fixe et mobile.

Le véhicule est de préférence équipé d'un coussin gonflable de sécurité, qui est mis en action en cas de choc et amortit l'impact du conducteur sur le volant de la colonne.

Avantageusement, la colonne de direction selon l'invention est également dotée d'un dispositif d'absorption d'énergie en cas de choc.

Le verrouillage en hauteur de la colonne de direction permet d'assurer à son axe une direction fixe en cas de choc, cette stabilité de direction permettant d'ajuster de façon précise l'effort d'absorption d'énergie dû à un déplacement de la colonne impactée.

La présente invention va maintenant être illustrée sans être aucunement limitée par des exemples de réalisation, en référence aux dessins annexés, sur lesquels:

La Figure 1 est une première vue en perspective d'une colonne de direction à système de guidage et de verrouillage suivant l'invention.

La Figure 2 est une autre vue en perspective de la colonne de direction représentée sur la Figure 1.

La Figure 3 est une coupe partielle suivant III-III des Figures 1 et 2 en position déverrouillée.

La Figure 4 est une coupe similaire à la Figure 3 en position verrouillée.

Les Figures 5a, 5b, 5c et 5d sont respectivement des vues de dessus, en coupe latérale selon Vb-Vb, de dessous et en coupe transversale selon Vd-Vd de la pièce fixe crantée correspondant aux Figures 1 à 4.

Les Figures 6a, 6b et 6c sont respectivement des vues de dessus, en coupe latérale selon Vlb-Vlb et de dessous de la pièce mobile crantée correspondant aux Figures 1 à 4.

Les Figures 7a et 7b sont respectivement des vues latérale et de dessus du ressort constituant le moyen élastique de la colonne des Figure 1 à 4.

Les Figures 8a, 8b, 8c et 8d sont respectivement des vues de dessus, en coupe latérale, selon Vlllb-Vlllb, de dessous et en coupe transversale selon Vllld-Vllld d'une variante de réalisation de la pièce mobile crantée représentée sur les Figures 6a, 6b et 6c.

Aux dessins, les mêmes chiffres de référence sont utilisés pour désigner des éléments identiques.

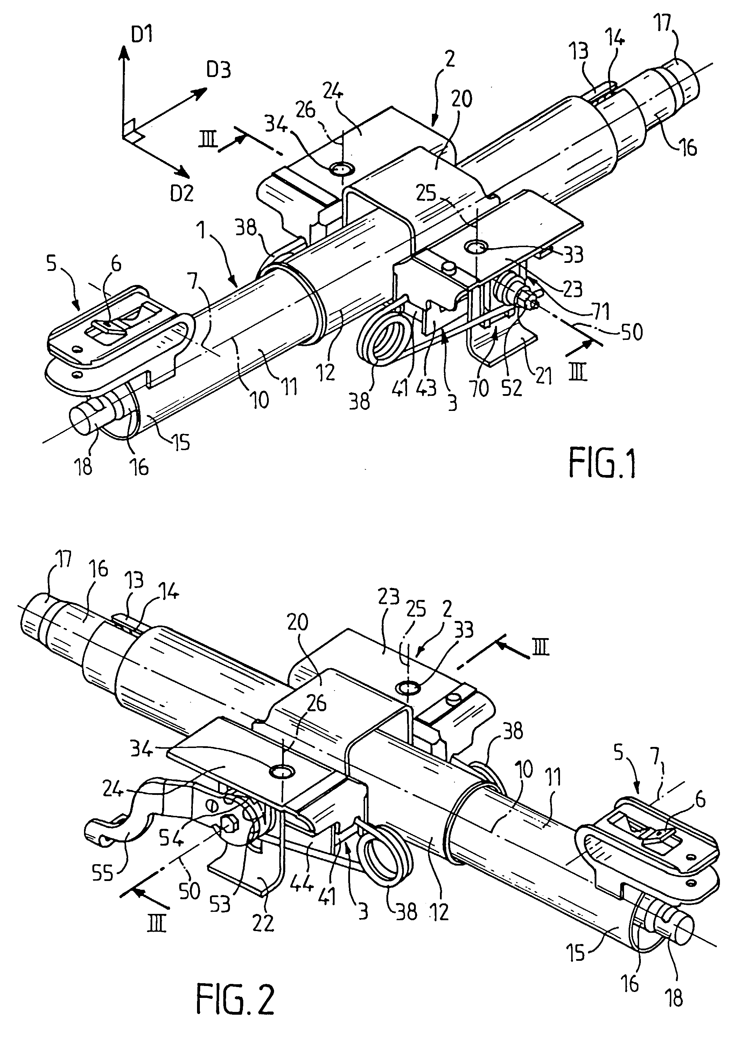

La colonne de direction pour véhicule automobile représentée aux Figures 1 et 2 comprend un corps 1 d'axe 10. Cet axe 10 est orienté sensiblement dans le sens longitudinal du véhicule et incliné par rapport à l'horizontale, d'un angle usuellement compris entre 20 et 30°. Le corps 1 contient une tige 16 de transmission reliée au volant (non représenté) par son extrémité arrière 17, et à la transmission de direction (non représentée) par son extrémité avant 18. L'extrémité arrière 17 de la tige 16 est avantageusement équipée d'un coussin gonflable de sécurité, destiné à répartir les efforts dus à un choc éventuel sur le conducteur.

Par la suite, on emploiera respectivement les termes "arrière" et "avant" en référence à l'arrière et à l'avant du véhicule.

A son extrémité arrière, le corps 1 de colonne comporte une pièce 13 de fixation de commutateurs (non représentés). Cette pièce 13 est tout à fait facultative pour les besoins de la présente invention. Elle a été seulement représentée pour illustrer l'ensemble du montage d'une colonne telle qu'elle peut être utilisée pratiquement. Dans cet exemple, la pièce 13 est pourvue d'une fente 14 parallèle à l'axe 10, permettant d'orienter la pièce 13 en rotation autour de l'axe 10.

Par son extrémité avant 15, le corps 1 de colonne coopère avec la transmission de direction par l'intermédiaire d'un système d'articulation 5. Ce système d'articulation 5 rend possible une rotation autour d'un axe 7 de rotation horizontal et perpendiculaire à l'axe 10 de colonne, grâce à une bascule 6.

Dans l'exemple de réalisation, représenté sur les Figures 1 et 2, le corps 1 est télescopique et comprend un tube interne 11 emboîté dans un tube externe 12, le tube externe 12 pouvant coulisser sur le tube interne 11 dans la direction de l'axe 10 de colonne lors d'un réglage en profondeur.

Le corps 1 de colonne est lié rigidement à une partie mobile 3. Cette partie mobile 3 comporte un carré-renfort 40, visible sur les Figures 3 et 4, rigidifié par une traverse 41, sur lequel repose le corps 1. Le tube externe 12 du corps 1 est lié rigidement au carré-renfort 40 par soudure ou par sertissage. Le carré-renfort 40 est muni de deux pattes 43 et 44 orientées sensiblement verticalement de part et d'autre du corps 1 de colonne.

La partie mobile 3 est ajustable par rapport à une partie fixe 2.

Cette partie fixe 2 comprend un support 20 muni de deux pattes 21 et 22 sensiblement verticales, situées de part et d'autre du corps 1 de colonne et associées respectivement aux pattes 43 et 44 du carré-renfort 40.

Le support 20 est également muni de deux ailes 23 et 24 sensiblement horizontales situées de part et d'autre du corps 1 de colonne et liées rigidement au châssis du véhicule. Les ailes 23 et 24 sont fixées au châssis selon respectivement des axes de fixation 25 et 26 perpendiculaires à l'axe 10 de colonne et situés dans des plans verticaux, passant respectivement par des trous circulaires 33 et 34 pratiqués dans les ailes 23 et 24. Les organes de fixation sont typiquement des vis venant dans des taraudages situés sur le châssis.

Le montage avec carré-renfort et support n'est qu'un exemple possible de réalisation. Il peut être remplacé par tout autre moyen permettant de relier le corps 1 au châssis du véhicule.

Selon une variante de réalisation, l'ensemble constitué par le tube externe 12 et le carré-renfort 40 peut être conçu en une seule pièce, réalisée par exemple en fonderie d'aluminium ou de magnésium.

La partie mobile 3 entraînant le corps 1 de colonne peut être positionnée par rapport à la partie fixe 2, grâce à un système de guidage et de verrouillage. Les parties fixe 2 et mobile 3 sont reliées l'une à l'autre suivant un axe transversal 50 de positionnement traversant les pattes 21 et 22 du support 20 et les pattes 43 et 44 du carré-renfort 40. L'axe transversal 50 est perpendiculaire à l'axe 10 du corps 1 de colonne.

Deux ressorts de rappel 38 en soi connus sont prévus latéralement de part et d'autre du corps 1 pour équilibrer le poids du volant lors de manoeuvres de réglage. Chacun d'entre eux est attaché par une première extrémité fixe à une pièce d'accrochage disposée sous l'aile 23, 24 correspondante et solidaire de la partie fixe 2. Sa seconde extrémité, mobile, aboutit autour de l'axe transversal 50, du côté correspondant du corps 1. Chacun des ressorts 38 comprend une partie médiane formant des circonvolutions qui font contrepoids au volant.

Le système de guidage et de verrouillage comprend une vis 51 de positionnement associée à un écrou 52 (Figures 3 et 4). La vis 51, dirigée suivant l'axe transversal 50, passe à travers des ouvertures oblongues 59 et 60 des pattes 43 et 44 du carré-renfort 40, parallèles à l'axe 10 de colonne. Elle passe également à travers des ouvertures oblongues 57 et 58 des pattes 21 et 22 du support 20 perpendiculaires à l'axe 10.

Ces ouvertures oblongues 57, 58, 59, 60 ont une fonction de guidage de la vis 51, tout en imposant des butées pour des positions de réglage extrêmes.

L'extrémité de la vis 51 opposée à l'écrou 52 est reliée à une came 53 et à une contre-came 54. Le système de verrouillage comprend également un levier de manoeuvre 55 coopérant avec la contre-came 54 et permettant de l'actionner en rotation. La came 53 et la contre-came 54 peuvent être amenées à coopérer sous l'action du levier de manoeuvre 55, pour serrer ou pour desserrer les éléments disposés le long de l'axe transversal 50. La levier 55 permet ainsi de commander des mouvements de rapprochement et d'écartement de ces pièces et d'exercer des pressions entre les pattes 21, 22 correspondant à la partie fixe 2 et celles 43, 44 correspondant respectivement à la partie mobile 3 associées. La came 53 guide également la vis 51 par rapport à la partie fixe 2.

Les trous oblongs 59, 60 des pattes 43, 44 du carré-renfort 40 présentent des butées limitant la course de la vis 51 le long de l'axe 10.

Des patins 63 et 64 sont interposés entre les pattes adjacentes 21, 22, 43, 44 des parties fixe 2 et mobile 3 et sont traversés par la vis 51. Ces patins 63, 64 constituent des surfaces d'adhérence en position de verrouillage. Ils contribuent également au guidage des pattes 43 et 44 du carré-renfort 40 par rapport à celles 21 et 22 du support 20.

La longueur des patins 63, 64 parallèlement à l'axe 10 de colonne détermine la course en profondeur de la vis 51.

Le système de guidage et de verrouillage comprend également une pièce fixe crantée 70 assemblée sur la patte 21 du support 20, et traversée par l'axe transversal 50. Une pièce mobile crantée 71, placée sur la vis 51 du côté de l'écrou 52, est disposée en vis-à-vis de cette pièce fixe 70, extérieurement par rapport au corps 1 de colonne.

Conformément à l'invention, un moyen élastique, sous forme d'un ressort 72 est disposé entre les pièces 70 et 71.

La came 53 et la pièce mobile crantée 71 sont pourvues respectivement de creusures circulaires 110 et 111. Ces creusures 110 et 111 sont destinées au passage de ressorts de rappel 38.

Une rondelle anti-friction 73 est interposée entre l'écrou 52 et la pièce mobile crantée 71.

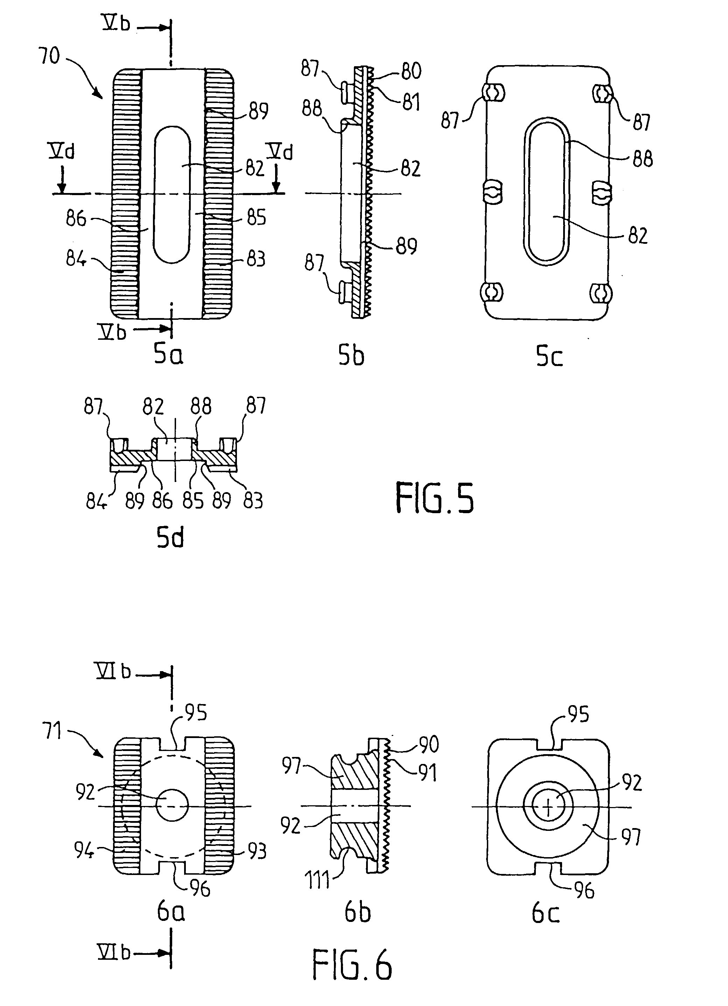

La pièce fixe crantée 70, représentée sur les Figures 5a, 5b,5c et 5d a une forme sensiblement rectangulaire. Elle comporte un trou oblong 82 longitudinal. Le long de bords situés de part et d'autre de ce trou oblong 82, la pièce 70 comprend deux dentures 83 et 84 consistant en une alternance de crans 80 et de dents 81, orientés perpendiculairement à la direction du trou oblong 82. Des pistes 85 et 86 disposées selon le plan de la pièce fixe 70 sont prévues entre le trou 82 et respectivement les dentures 83 et 84. Un léger décalage entre les pistes 85, 86 et les dentures 83, 84 fait apparaître des rebords 89 perpendiculaires au plan de la pièce fixe 70 et parallèles à la direction du trou oblong 82.

La pièce crantée 70 est raccordée à la patte 21 par une proéminence 88 s'insérant dans l'ouverture 57 et par des tétons 87 de fixation. L'ouverture 57 se trouve ainsi en vis-à-vis du trou oblong 82 et a des dimensions supérieures à celui-ci.

La pièce mobile crantée 71, représentée sur les Figures 6a, 6b et 6c a une forme approximativement carrée. Elle comporte un trou circulaire 92 destiné au passage de la vis 51. Des dentures parallèles 93 et 94 sont disposées de part et d'autre de ce trou 92. Elles comportent une alternance de crans 90 et de dents 91 orientées perpendiculairement à la direction des dentures 93 et 94. Des encoches 95 et 96 sont pratiquées sur des bords opposés, entre les dentures 93 et 94.

La pièce mobile 71 comporte également un corps 97 sensiblement cylindrique, de section circulaire du côté opposé aux crans 90. Ce corps 97 de forme relativement massive présente la creusure circulaire 111 précédemment citée.

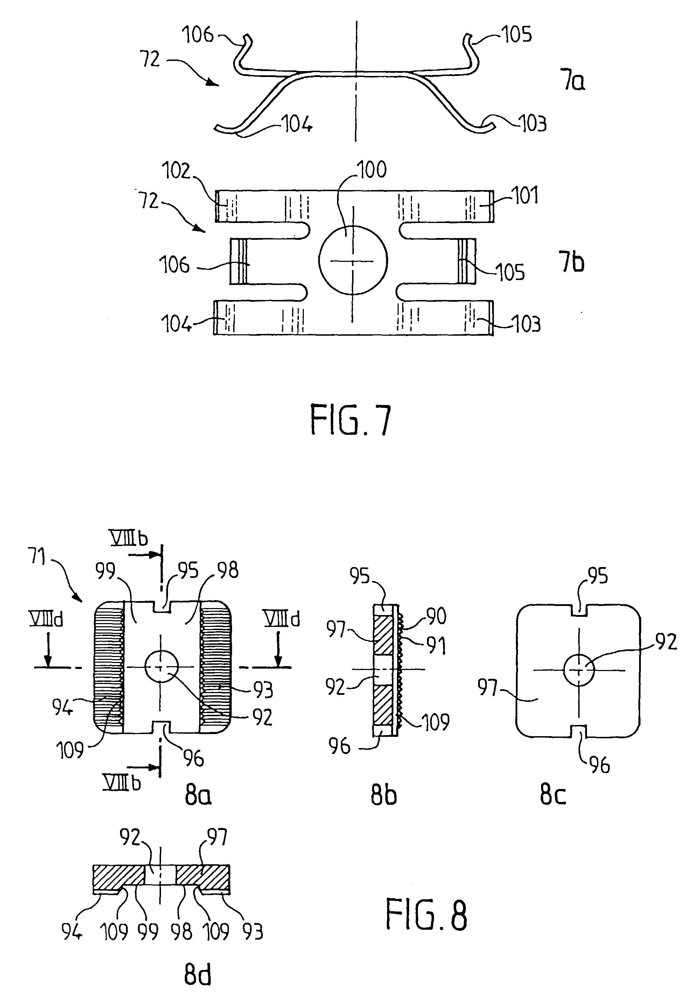

Le ressort 72, représenté sur les Figures 7a et 7b, comporte un trou circulaire 100, quatre pattes 101, 102, 103 et 104, situées d'un premier côté de sa surface en ses quatre coins et deux languettes, 105 et 106, situées du second côté de sa surface sur des côtés opposés. En projection sur un plan parallèle à cette surface, comme représenté sur la Figure 7b, le bras 105 s'étend entre les pattes 101 et 103, et le bras 106 entre les pattes 102 et 104.

En position, comme ceci apparaît sur les Figures 3 et 4, les pattes 101 et 102 du ressort 72 sont placées sur la piste 85 de la pièce 70, et ses pattes 103 et 104 sur la piste 86. Les pattes 101, 102, 103 et 104 peuvent glisser le long des pistes 85 et 86. Les pistes 85 et 86 permettent de positionner précisément en rotation le ressort 72 autour de l'axe transversal 50 par rapport à la pièce fixe crantée 70. D'autre part, elles constituent un appui du ressort 72 pour réaliser l'écartement des pièces 70 et 71. Enfin, elles exercent une fonction de frottement du ressort 72 contre la pièce fixe 70. Ce frottement permet de conserver une légère tension résiduelle dans le système de guidage et de verrouillage, le long de la vis 51, cette tension empêchant des petits mouvements ou des vibrations susceptibles de générer des bruits.

D'autre part, les rebords 89 guident les pattes 101, 102, 103, 104 dans leur mouvement de translation. La largeur des pistes 85, 86, mesurée dans le plan de la pièce fixe 70 perpendiculairement à la direction du trou oblong 82, est très légèrement supérieure à celle des pattes 101, 102, 103, 104, afin de générer un faible jeu. Ce jeu facilite le déplacement du ressort 72 sur la pièce fixe 70, sans porter préjudice à l'orientation relative de ces deux éléments.

Les languettes 105 et 106 du ressort 72 sont respectivement fixées dans les encoches 95 et 96 de la pièce mobile 71. Ces encoches 95 et 96 assurent ainsi un positionnement précis en rotation de la pièce mobile 71 autour de l'axe transversal 50 par rapport au ressort 72. De plus, les languettes 105, 106 permettent de solidariser le ressort 72 et la pièce mobile 71, ce qui facilite les opérations de montage en réduisant les manipulations.

Le ressort 72, positionné entre les pièces 70 et 71, remplit ainsi à la fois une fonction d'écartement de ces pièces 70 et 71, et de positionnement précis en rotation de ces pièces l'une par rapport à l'autre, autour de l'axe transversal 50. Il s'ensuit que les dents 81 et 91 des pièces crantées respectivement fixe 70 et mobile 71 restent toujours parallèles, y compris lorsque les deux pièces crantées 70, 71 sont écartées l'une de l'autre. Ce positionnement précis garantit un bon engrènement des dentures 83, 84 et respectivement 93, 94 permettant en conséquence un fonctionnement satisfaisant du système de guidage et de verrouillage.

La vis 51 traverse l'ouverture 57, le trou oblong 82 de la pièce fixe 70, le trou circulaire 100 du ressort 72, et le trou circulaire 92 de la pièce mobile 71.

En fonctionnement, la colonne de direction admet deux positions. Dans une première position ou position déverrouillée, représentée sur la Figure 3, la partie mobile 3 peut se déplacer par rapport à la partie fixe 2. Dans une seconde position ou position verrouillée, représentée sur la Figure 4, les parties fixe 2 et mobile 3 sont immobilisées l'une par rapport à l'autre.

En position déverrouillée, le système de came 53 et contre-came 54 est relâché grâce au levier de manoeuvre 55. Un jeu existe alors le long de la vis 51. Ce jeu est pour l'essentiel reporté entre les pièces crantées 70 et 71, grâce à l'action d'écartement exercée par le ressort 72. Il est suffisant pour que les dents 81 de la pièce fixe crantée 70 n'aient plus de contact avec les dents 91 de la pièce mobile crantée 71. Les dentures 83, 84, 93 et 94 des pièces 70 et 71 ne présentent donc aucun obstacle aux mouvements relatifs de ces pièces 70 et 71.

Le relâchement du système à came 53 et contre-came 54 rend également nulles ou faibles les pressions exercées par les pattes 21 et 22 du support 20. L'absence d'adhérence entre le support 20 et le carré-renfort 40 n'entrave donc pas des mouvements de la partie mobile 3 par rapport à la partie fixe 2.

Dans cette position déverrouillée, le carré-renfort 40 peut ainsi se déplacer dans une direction D3 (voir Figure 1) parallèle à l'axe 10 du corps 1 de colonne, grâce aux ouvertures oblongues 59 et 60 parallèles à cette direction D3 et entourant la vis 51. Le carré-renfort 40 entraîne dans son mouvement l'ensemble de la partie mobile 3. La vis 51, immobilisée par les ouvertures oblongues 57, 58 et 82 perpendiculaires à la direction D3, maintient alors la pièce mobile 71 en position. On obtient ainsi un guidage en profondeur, le tube externe 12 coulissant sur le tube interne 11.

La partie mobile 3 peut également être déplacée parallèlement à une direction D1 perpendiculaire à l'axe 10 et contenue dans un plan vertical. Le déplacement selon la direction D1 est obtenu grâce à un mouvement vertical de la vis 51 dans les ouvertures oblongues 57 et 58 pratiquées dans les pattes 21 et 22 du support 20. Les patins 63 et 64 interposés entre le support 20 et le carré-renfort 40 contribuent au guidage de la vis 51. La came 53 assure également cette fonction. Dans son mouvement, la vis 51 entraîne l'ensemble de la partie mobile 3, ainsi que la pièce mobile crantée 71. Le mouvement relatif de cette pièce 71 par rapport à la pièce fixe crantée 70 est contrôlé par le ressort 72, solidaire de la pièce 71 par ses languettes 105 et 106, et dont les pattes 101, 102, 103 et 104 glissent sur les pistes 85 et 86 prévues sur la pièce 70 et parallèles à la direction D1. On réalise ainsi un guidage en hauteur, le corps 1 de colonne subissant une faible rotation de quelques degrés autour de l'axe 7 de rotation grâce au système d'articulation 5.

En position déverrouillée, l'absence d'adhérence, ou la faible adhérence, entre le support 20 et le carré-renfort 40 ainsi que l'écartement automatique des pièces fixe 70 et mobile 71 grâce au ressort 72 permettent de réaliser les guidages sans faire intervenir un quelconque moyen supplémentaire.

Lors de manoeuvres de réglage, l'axe 50 de la vis 51 reste toujours parallèle à une direction D2 horizontale et perpendiculaire aux directions D1 et D3.

Une fois le corps 1 de colonne réglé en position choisie, il est bloqué et la colonne passe en position verrouillée.

Ce blocage est obtenu par une rotation du levier de manoeuvre 55 qui fait coopérer la came 53 et la contre-came 54 pour créer une tension dans la vis 51. L'écrou 52 associé à la vis 51 permet de régler cette tension, la rondelle anti-friction 73 évitant un frottement trop important entre l'écrou 52 et le corps 97 de la pièce mobile crantée 71.

Le resserrement de la came 53 et de la contre-came 54 génère des pressions importantes entre les pattes 21 et 22 du support 20 et respectivement les pattes 43 et 44 du carré-renfort 40. Les patins 63 et 64 renforcent l'adhérence entre ces pattes 21, 22, 43 et 44. La partie mobile 3 se retrouve ainsi bloquée par rapport à la partie fixe 2.

Ce blocage est considérablement renforcé par l'engrènement des pièces crantées fixe 70 et mobile 71. Le système à came 53 et contre-came 54 impose, en effet, un rapprochement des deux pièces 70 et 71 et une compression du ressort 72. La coopération des pattes 101, 102, 103 et 104 du ressort 72 avec les pistes 85 et 86 de la pièce fixe 70, et de ses languettes 105 et 106 avec les encoches 95 et 96 de la pièce mobile 71, assure un maintien angulaire précis de la pièce 71 par rapport à la pièce 70, permettant ainsi un engrènement correct des dentures 83 et 84 de la pièce fixe 70 avec respectivement les dentures 93 et 94 de la pièce mobile 71.

La présence des dentures 83, 84, 93, 94 augmente de manière sensible l'effort de tenue de la partie mobile 3 dans la partie fixe 2, comparé à un simple blocage par adhérence. Cet effort est ainsi multiplié par trois à cinq. La colonne de direction est alors à même de résister à un effort supérieur à 3000 N dans la direction D1, et pouvant aller jusqu'à 10.000 N.

Une variante de réalisation de la pièce mobile crantée 71 est représentée aux Figures 8a, 8b, 8c et 8d. Les éléments semblables à ceux de la réalisation précédente, sont affectés des mêmes signes de référence. Le corps 97 est également cylindrique et de section circulaire, mais sensiblement moins profond que dans la réalisation précédente. Il ne comporte pas de creusure destinée au passage des ressorts de rappel 38.

Dans cette variante, la pièce mobile crantée 71 comporte des pistes 98 et 99 disposées entre le trou circulaire 92 et respectivement les dentures 93 et 94, similaires à celles 83 et 84 prévues pour la pièce fixe crantée 70 et remplissant la même fonction. Un léger décalage entre les pistes 98, 99 et les dentures 93, 94 fait aussi apparaître des rebords 109 perpendiculaires au plan de la pièce mobile cranté 71 et parallèles à la direction des pistes 98, 99.

En correspondance, le ressort 72 comporte quatre pattes supplémentaires, symétriques par rapport à sa surface des quatre pattes 101, 102, 103, 104 déjà existantes et destinées à venir dans les pistes 98, 99 de la partie mobile crantée 71. En position, ces pattes peuvent glisser le long des pistes 98 et 99, et sont guidées dans leur mouvement de translation par les rebords 109. Un jeu semblable à celui prévu pour la pièce fixe crantée 70 facilite le déplacement du ressort 72 sur la pièce mobile 71. Les languettes 105 et 106 et les encoches 95 et 96 servent ainsi uniquement à fixer le ressort 72 à la pièce mobile crantée 71, le positionnement en rotation étant assuré par les pistes 98, 99 et les pattes correspondantes du ressort 72.

En position déverrouillée, la pièce mobile crantée 71 est entraînée, dans un mouvement de translation selon l'une des directions D1 ou D3, par la vis 51 traversant son trou circulaire 92. Elle reste précisément positionnée en rotation par rapport à la pièce fixe crantée 70 grâce d'une part à l'insertion des languettes 105 et 106 dans les encoches 95 et 96, et d'autre part, au placement sur les pistes 98 et 99 des pattes correspondantes du ressort 72.

Sans nuire au fonctionnement du système, ces languettes 105, 106 et ces encoches 95, 96 peuvent être supprimées, la vis 51 assurant en position déverrouillée, l'appui contre les pistes 98 et 99 des pattes correspondantes du ressort 72.

Les ressorts de rappel 38 peuvent être remplacés par tout autre moyen permettant d'équilibrer le poids du volant lors de manoeuvres de réglage.

Bien que le système à came 53 et contre-came 54 constitue une solution préférée dans le système de verrouillage, il peut être remplacé par tout autre système de blocage. Un ensemble vis-écrou, ou un système à genouillère, peuvent ainsi convenir.

Le support 20 avec carré-renfort 40 peut être remplacé par toute pièce susceptible d'accueillir et de maintenir le corps 1 de colonne, telle qu'une pièce tubulaire.

L'orientation verticale des pattes 21, 22, 43, 44 est une réalisation avantageuse pour des raisons de compacité mais pas nécessaire. Ces pattes pourraient également être orientées obliquement, voire même présenter des coudes et coopérer dans un plan horizontal.

Les ailes 23, 24 sont quant à elles susceptibles d'admettre toute autre forme que celles présentées à titre d'exemples et peuvent même être remplacées par de simples proéminences de fixation.

Au lieu de dents 81 et 91 orientées parallèlement à la direction D3 de l'axe 10 de colonne, des crans de forme quelconque peuvent être prévus sur les pièces 70 et 71. L'important est que les pièces crantées 70 et 71 coopèrent par conjugaison de forme. La forme longitudinale des dents 81, 91 et crans 80, 90 génère cependant une résistance importante dans la direction D1, et est donc particulièrement avantageuse.

D'autre part, les pièces crantées fixe 70 et mobile 71 peuvent admettre d'autres formes que celles approximativement rectangulaires présentées dans les exemples de réalisation, telles que des formes circulaires ou polygonales. Le corps 97 de la pièce mobile crantée 71 peut aussi admettre une autre forme que celle cylindrique circulaire choisie à titre de préférence, telle qu'une forme conique ou polygonale. De plus, sa profondeur parallèlement à la vis 51 peut être quelconque.

Dans l'exemple exposé, les pistes 85, 86 de la pièce fixe crantée 70 sont disposées selon une surface plane, les rebords 89 assurant une fonction de guidage des pattes 101, 102, 103, 104 du ressort 72. Il est tout à fait possible de donner aux pistes 85, 86 d'autres inclinaisons que celle correspondant au plan de la pièce fixe 70. Elles peuvent ainsi définir respectivement deux surfaces planes parallèles à la direction du trou oblong 82 et symétriques par rapport à ce dernier. Les pistes 85, 86 peuvent aussi, plus généralement, constituer des surfaces non planes. Par exemple, il peut s'agir de formes cylindriques à base circulaire ayant des axes parallèles à la direction du trou oblong 82. La présence des rebords 89 n'est alors plus nécessaire, les pistes 85, 86 ayant également une fonction de guidage. Dans ces différents cas, les pattes 101, 102, 103, 104 ont des formes complémentaires de celles des pistes 85, 86 associées.

Tout en restant dans le domaine de l'invention revendiquée, il est possible de remplacer le trou oblong 82 de la pièce fixe crantée 70 par un trou circulaire capable d'enserrer la vis 51, et de remplacer le trou circulaire 92 de la pièce mobile crantée 71 par un trou oblong ayant une direction parallèle à celle des dentures 93 et 94. Les fonctions des deux pièces crantées 70 et 71 sont alors inversées: lors d'un mouvement relatif des parties fixe 2 et mobile 3 selon la direction D1, la vis 51 reste solidaire de la partie fixe 2, tandis que la pièce mobile crantée 71 solidaire de la partie mobile 3 est positionnée verticalement par coulissement sur la vis 51.

Le système de guidage et de verrouillage décrit pour une colonne réglable en profondeur et en hauteur peut être utilisé de la même manière pour une colonne réglable uniquement en hauteur.

Le renforcement du blocage de la partie mobile 3 dans la direction D1 est particulièrement approprié, car il permet de maintenir la direction axiale du corps 1 de colonne en cas de choc. Il est envisageable d'équiper le réglage en profondeur d'un dispositif constitué de pièces crantées, afin de garantir un meilleur maintien du positionnement en profondeur.

L'invention peut s'avérer particulièrement intéressante dans le cas où la colonne est équipée d'un coussin gonflable de sécurité. Le verrouillage obtenu par l'invention permet en effet de garantir le maintien de la colonne en direction lors d'un choc.

Les signes de référence insérés après les caractéristiques techniques mentionnées dans les revendications, ont pour seul but de faciliter la compréhension de ces dernières, et n'en limitent aucunement la portée.

## Revendications

1. Colonne de direction pour véhicule automobile, comportant:
- un corps (1) de colonne s'étendant sensiblement dans le sens longitudinal du véhicule,
- une partie fixe (2) liée rigidement au châssis du véhicule et comprenant deux premières pattes (21, 22) situées de chaque côté du corps (1) de colonne,
- une partie mobile (3) liée rigidement au corps (1) de colonne et comprenant deux secondes pattes (43, 44) latérales coopérant respectivement avec les premières pattes (21, 22), de manière que la partie mobile (3) puisse avoir un déplacement limité par rapport à la partie fixe (2),
- un système de guidage et de verrouillage permettant de positionner et de fixer la partie mobile (3) par rapport à la partie fixe (2), ledit système de guidage et de verrouillage comportant
- au moins une pièce fixe crantée (70) solidaire d'une des pattes (21) de la partie fixe (2),
- au moins une pièce mobile crantée (71) reliée à la partie mobile (3) et disposée en vis-à-vis de la pièce fixe (70),
- des moyens de fixation (51, 52, 53, 54, 55) permettant de solidariser les parties mobile (3) et fixe (2) en position verrouillée, dans laquelle les crans (80, 90) des deux pièces (70, 71) coopèrent par conjugaison de forme,
un moyen élastique (72) étant prévu entre lesdites pièces fixe (70) et mobile (71) crantées, de manière à être comprimé par les moyens de fixation (51, 52, 53, 54, 55) en position verrouillée et à provoquer l'écartement des dites pièces (70, 71) lorsque les moyens de fixation (51, 52, 53, 54, 55) sont mis hors d'action, ce qui correspond à une position déverrouillée, dans laquelle la partie mobile (3) peut se déplacer par rapport à la partie fixe (2),
caractérisée en ce que:
- au moins une des pièces fixes (70) et/ou au moins une des pièces mobiles (71) comporte au moins une piste (85, 86, 98, 99) s'étendant dans une direction sensiblement parallèle à la direction de déplacement de la partie mobile (3) par rapport à la partie fixe (2),
- le moyen élastique (72) comporte au moins une patte (101, 102, 103, 104) capable de glisser sur ladite piste (85, 86, 98, 99),
- la colonne de direction comprend des moyens de positionnement en rotation (85, 86, 102, 103, 104) des pièces fixes (70) par rapport au moyen élastique (72), et
- le système de guidage et de verrouillage comporte des moyens d'appui (51, 95, 96, 105, 106) de ladite pièce mobile (71) contre le moyen élastique (72) en position déverrouillée, de telle sorte que le moyen élastique (72) assure à la fois la fonction d'écartement élastique desdites pièces crantées (70, 71) associées et de guidage desdites pièces l'une par rapport à l'autre.

2. Colonne de direction selon la revendication 1, caractérisée en ce qu'au moins une des pièces fixes (70) comporte au moins une piste (85, 86) s'étendant dans une direction sensiblement parallèle à la direction de déplacement de la partie mobile (3) par rapport à la partie fixe (2) et en ce que le moyen élastique (72) comporte au moins une patte (101, 102, 103, 104) capable de glisser sur ladite piste (85, 86) et est solidaire de la pièce mobile (71) associée à ladite pièce fixe (70).

3. Colonne de direction selon la revendication 2, caractérisée en ce que ladite piste (85, 86) étant disposée selon une surface plane, elle est bordée par au moins un rebord (89) en biais par rapport à ladite surface plane, constituant une surface de guidage.

4. Colonne de direction selon l'une des revendications 2 ou 3, caractérisée en ce que ladite pièce mobile (71) comporte au moins une encoche (95, 96) et le moyen élastique (72) comporte une languette (105, 106) insérable dans ladite encoche (95, 96), cette insertion permettant de solidariser la pièce mobile (71) avec le moyen élastique (72) et de lui assurer un positionnement précis par rapport à ladite pièce fixe (70).

5. Colonne de direction selon l'une quelconque des revendications 1 à 4, caractérisée en ce qu'au moins une des pièces mobiles (71) comporte au moins une piste (98, 99) s'étendant dans une direction sensiblement parallèle à la direction de déplacement de la partie mobile (3) par rapport à la partie fixe (2), et en ce que le moyen élastique (72) comporte au moins une patte capable de glisser sur ladite piste (98, 99).

6. Colonne de direction selon l'une quelconque des revendications précédentes, caractérisée en ce que les moyens de fixation (51, 52, 53, 54, 55) comprennent une tige (51) s'étendant dans une direction (50) transversale à l'axe (10) de colonne en passant à travers des ouvertures (57, 58, 59, 60) des parties fixe (2) et mobile (3), des éléments de serrage (52, 53, 54) étant disposés à chacune des extrémités de la tige (51) et permettant, lorsqu'ils sont actionnés, de resserrer les pattes (21, 22) de la partie fixe (2) contre les pattes (43, 44) adjacentes de la partie mobile (3).

7. Colonne de direction selon la revendication 6, caractérisée en ce que les ouvertures (57, 58) de la partie fixe (2) ont une forme oblongue, la tige (51) coulissant dans lesdites ouvertures (57, 58) en position déverrouillée en entraînant la partie mobile (3) et étant immobilisée en position verrouillée correspondant à l'engrènement des pièces crantées (70, 71).

8. Colonne de direction selon l'une des revendications 6 ou 7, caractérisée en ce que les ouvertures (59, 60) de la partie mobile (3) ont une forme oblongue.

9. Colonne de direction selon l'une quelconque des revendications 6 à 8, caractérisée en ce qu'au moins une des pièces mobiles (71) est fixée à une des extrémités de la tige (51), la pièce fixe (70) et la patte (21) de la partie fixe (2) correspondantes étant interposées entre ladite pièce mobile (71) et une des pattes (43) de la partie mobile (3).

10. Colonne de direction selon la revendication 9, caractérisée en ce que la tige (51) est une vis et les éléments de serrage comportent un écrou (52), ledit écrou (52) coopérant avec la pièce mobile (71) avec interposition d'un moyen antifriction (73).

11. Colonne de direction selon la revendication 10, caractérisée en ce que le moyen antifriction (73) est une rondelle, constituée ou revêtue d'un matériau antifriction, ou bien une butée à billes ou à aiguilles.

12. Colonne de direction selon l'une quelconque des revendications 6 à 11, caractérisée en ce que les éléments de serrage comportent une came (53), une contre-came (54) et un levier de manoeuvre (55) disposés à une des deux extrémités de la tige (51), les pièces crantées (70, 71) étant disposées à l'autre extrémité, la came (53) et la contre-came (54) pouvant être amenées à coopérer sous l'action du levier de manoeuvre (55), pour faire passer la colonne de la position déverrouillée à la position verrouillée et inversement.

13. Colonne de direction selon l'une quelconque des revendications précédentes, caractérisée en ce que des patins (63, 64) sont interposés entre les pattes adjacentes (21, 22, 43, 44) des parties fixe (2) et mobile (3).

14. Colonne de direction selon l'une quelconque des revendications précédentes, caractérisée en ce que le véhicule est équipé d'un coussin gonflable de sécurité, qui est mis en action en cas de choc et amortit l'impact du conducteur sur le volant et la colonne.

## Patentansprüche

1. Lenksäule für ein Kraftfahrzeug, umfassend:
- einen Lenksäulenkörper (1), der sich im wesentlichen in die Längsrichtung des Fahrzeugs erstreckt,
- ein festes Teil (2), das starr mit dem Fahrgestell des Fahrzeugs verbunden ist und zwei erste Befestigungseisen (21, 22) umfasst, die beiderseits des Lenksäulenkörpers (1) angeordnet sind,
- ein bewegliches Teil (3), das starr mit dem Lenksäulenkörper (1) verbunden ist und zwei zweite seitliche Befestigungseisen (43, 44) umfasst, die jeweils mit den ersten Befestigungseisen (21, 22) so zusammenwirken, dass das bewegliche Teil (3) eine begrenzte Verschiebung in Bezug auf das feste Teil (2) durchführen kann,
- ein Führungs- und Verriegelungssystem, das es ermöglicht, das bewegliche Teil (3) in Bezug auf das feste Teil (2) zu positionieren und zu befestigen, wobei das Führungs- und Verriegelungssystem umfasst:
- mindestens ein festes gerastetes Teil (70), das mit einem der Befestigungseisen (21) des festen Teils (2) fest verbunden ist,
- mindestens ein bewegliches gerastetes Teil (71), das mit dem beweglichen Teil (3) verbunden und gegenüber dem festen Teil (70) angeordnet ist,
- Befestigungsmittel (51, 52, 53, 54, 55), die es ermöglichen, das bewegliche Teil (3) und das feste Teil (2) in verriegelter Position zu verbinden, in der die Rasten (80, 90) der beiden Teile (70, 71) durch Ineinandergreifen der Formen zusammenwirken,
wobei ein elastisches Mittel (72) zwischen dem festen (70) und dem beweglichen (71) gerasteten Teil derart vorgesehen ist, dass es durch die Befestigungsmittel (51, 52, 53, 54, 55) in verriegelter Position zusammengedrückt wird und das Beabstanden dieser Teile (70, 71) bewirkt, wenn die Befestigungsmittel (51, 52, 53, 54, 55) außer Tätigkeit gesetzt werden, was einer entriegelten Position entspricht, in der sich das bewegliche Teil (3) in Bezug zu dem festen Teil (2) verschieben kann,
dadurch gekennzeichnet, dass
- mindestens eines der festen Teile (70) und/oder mindestens eines der beweglichen Teile (71) mindestens eine Spur (85, 86, 98, 99) umfasst, die sich in eine im wesentlichen zu der Verschieberichtung des beweglichen Teils (3) in Bezug zu dem festen Teil (2) parallele Richtung erstreckt,
- das elastische Mittel (72) mindestens ein Befestigungseisen (101, 102, 103, 104) umfasst, das in der Lage ist, auf der Spur (85, 86, 98, 99) zu gleiten,
- die Lenksäule Mittel zur Drehpositionierung (85, 86, 102, 103, 104) der festen Teile (70) in Bezug auf das elastische Mittel (72) umfasst, und
- das Führungs- und Verriegelungssystem Mittel zur Abstützung (51, 95, 96, 105, 106) des beweglichen Teils (71) gegen das elastische Mittel (72) in entriegelter Position umfasst, so dass das elastische Mittel (72) sowohl die Funktion des elastischen Beabstandens der verbundenen gerasteten Teile (70, 71) als auch der Führung dieser Teile zueinander gewährleistet.

2. Lenksäule nach Anspruch 1, dadurch gekennzeichnet, dass mindestens eines der festen Teile (70) mindestens eine Spur (85, 86) umfasst, die sich in eine im wesentlichen zu der Verschieberichtung des beweglichen Teils (3) in Bezug auf das feste Teil (2) parallele Richtung erstreckt, und dass das elastische Mittel (72) mindestens ein Befestigungseisen (101, 102, 103, 104) umfasst, das in der Lage ist, auf der Spur (85, 86) zu gleiten und mit dem beweglichen Teil (71), das mit dem festen Teil (70) in Verbindung steht, fest verbunden ist.

3. Lenksäule nach Anspruch 2, dadurch gekennzeichnet, dass die Spur (85, 86) entlang einer ebenen Fläche vorgesehen ist, die von mindestens einer Leiste (89) umgeben ist, die in Bezug auf die ebene Fläche, die eine Führungsfläche bildet, schräg ist.

4. Lenksäule nach einem der Ansprüche 2 oder 3, dadurch gekennzeichnet, dass das bewegliche Teil (71) mindestens eine Kerbe (95, 96) aufweist und dass das elastische Mittel (72) eine Zunge (105, 106) aufweist, die in die Kerbe (95, 96) einlegbar ist, wobei es dieses Einlegen ermöglicht, das bewegliche Teil (71) mit dem elastischen Mittel (72) zu verbinden und ihm eine genaue Positionierung in Bezug auf das feste Teil (70) zu gewährleisten.

5. Lenksäule nach einem der Ansprüche 1 bis 4, dadurch gekennzeichnet, dass mindestens eines der beweglichen Teile (71) mindestens eine Spur (98, 99) aufweist, die sich in eine im wesentlichen zu der Verschieberichtung des beweglichen Teils (3) in Bezug auf das feste Teil (2) parallele Richtung erstreckt, und dass das elastische Mittel (72) mindestens ein Befestigungseisen aufweist, das in der Lage ist, auf der Spur (98, 99) zu gleiten.

6. Lenksäule nach einem der vorstehenden Ansprüche, dadurch gekennzeichnet, dass die Befestigungsmittel (51, 52, 53, 54, 55) eine Stange (51) aufweisen, die sich in eine Richtung (50) quer zur Lenksäulenachse (10) erstreckt, indem sie durch Öffnungen (57, 58, 59, 60) des festen (2) und beweglichen Teils (3) verläuft, wobei Klemmelemente (52, 53, 54) an jedem der Enden der Stange (51) vorgesehen sind und es ermöglichen, bei ihrer Betätigung die Befestigungseisen (21, 22) des festen Teils (2) gegen die angrenzenden Befestigungseisen (43, 44) des beweglichen Teils (3) nachzustellen.

7. Lenksäule nach Anspruch 6, dadurch gekennzeichnet, dass die Öffnungen (57, 58) des festen Teils (2) eine längliche Form aufweisen, wobei die Stange (51) in den Öffnungen (57, 58) in entriegelter Position gleitet, indem sie das bewegliche Teil (3) antreibt, und in verriegelter Position festgestellt wird, die dem Ineinandergreifen der gerasteten Teile (70, 71) entspricht.

8. Lenksäule nach Anspruch 6 oder 7, dadurch gekennzeichnet, dass die Öffnungen (59, 60) des beweglichen Teils (3) eine längliche Form aufweisen.

9. Lenksäule nach einem der Ansprüche 6 bis 8, dadurch gekennzeichnet, dass mindestens eines der beweglichen Teile (71) an einem der Enden der Stange (51) befestigt ist, wobei das feste Teil (70) und das entsprechende Befestigungseisen (21) des festen Teils (2) zwischen dem beweglichen Teil (71) und einem der Befestigungseisen (43) des beweglichen Teils (3) angeordnet sind.

10. Lenksäule nach Anspruch 9, dadurch gekennzeichnet, dass die Stange (51) eine Schraube ist und die Klemmelemente eine Mutter (52) umfassen, wobei die Mutter (52) mit dem beweglichen Teil (71) zusammenwirkt, wobei ein Antifriktionsmittel (73) dazwischen angeordnet ist.

11. Lenksäule nach Anspruch 10, dadurch gekennzeichnet, dass das Antifriktionsmittel (73) eine Scheibe, die aus einem Antifriktionsmaterial gebildet oder mit diesem überzogen ist, oder auch ein Kugel- oder Nadellager ist.

12. Lenksäule nach einem der Ansprüche 6 bis 11, dadurch gekennzeichnet, dass die Klemmelemente eine Nocke (53), eine Gegennocke (54) und einen Betätigungshebel (55) umfassen, die an einem der beiden Enden der Stange (51) angeordnet sind, wobei die gerasteten Teile (70, 71) am anderen Ende angeordnet sind, und dass die Nocke (53) und die Gegennocke (54) veranlassbar sind, unter der Wirkung des Betätigungshebels (55) zusammenzuwirken, um die Lenksäule aus der entriegelten in die verriegelte Position und umgekehrt übergehen zu lassen.

13. Lenksäule nach einem der vorstehenden Ansprüche, dadurch gekennzeichnet, dass Tragschuhe (63, 64) zwischen den aneinandergrenzenden Befestigungseisen (21, 22, 43, 44) des festen Teils (2) und des beweglichen Teils (3) angeordnet sind.

14. Lenksäule nach einem der vorstehenden Ansprüche, dadurch gekennzeichnet, dass das Kraftfahrzeug mit einem aufblasbaren Sicherheitskissen versehen ist, das im Falle eines Aufpralls betätigt wird und den Anprall des Fahrers am Lenkrad und der Lenksäule dämpft.

## Claims

1. Motor vehicle steering column comprising :
- a column body (1) extending substantially in the longitudinal direction of the vehicle,
- a fixed portion (2) rigidly linked to the frame of the vehicle and comprising two first lugs (21, 22) situated on each side of the column body (1),
- a mobile portion (3) rigidly linked to the column body (1) and comprising two second lateral lugs (43, 44) cooperating respectively with the first lugs (21, 22) so that the mobile portion (3) can have a movement which is limited with respect to the fixed portion (2),
- a guiding and locking system for positioning and fixing the mobile portion (3) with respect to the fixed portion (2), said guiding and locking system comprising :
- at least one fixed notched element (70) integral with one of the lugs (21) of the fixed portion (2),
- at least one mobile notched element (71) connected to the mobile portion (3) and disposed opposite the fixed element (70),
- fixing means (51, 52, 53, 54, 55) liable to render integral the mobile (3) and fixed (2) portions in a locked position in which the notches (80, 90) of the two elements (70, 71) cooperate by shape mating,
an elastic means (72) being provided between said notched fixed (70) and mobile (71) elements, so as to be compressed by the fixing means (51, 52, 53, 54, 55) in the locked position and to cause said elements (70, 71) to be spaced from each other when the fixing means (51, 52, 53, 54, 55) are inactivated, which corresponds to an unlocked position in which the mobile portion (3) is liable to move with respect to the fixed portion (2),
characterised in that :
- at least one of the fixed elements (70) and/or at least one of the mobile elements (71) comprises at least one path (85, 86, 98, 99) extending in a direction substantially parallel to the direction of movement of the mobile portion (3) with respect to the fixed portion (2),
- the elastic means (72) comprises at least one lug (101, 102, 103, 104) liable to slide on said path (85, 86, 98, 99),
- the steering column comprises means (85, 86, 102, 103, 104) for positioning in rotation the fixed elements (70) with respect to the elastic means (72), and
- the guiding and locking system comprises means (51, 95, 96, 105, 106) for supporting said mobile element (71) against the elastic means (72) in the unlocked position, so that the elastic means (72) provides both the function of elastically spacing said associated notched elements (70, 71) and of guiding said elements with respect to one another.

2. Steering column according to claim 1, characterised in that at least one of the fixed elements (70) comprises at least one path (85, 86) extending in a direction substantially parallel to the direction of movement of the mobile portion (3) with respect to the fixed portion (2) and in that the elastic means (72) comprises at least one lug (101, 102, 103, 104) liable to slide on said path (85, 86) and is integral with the mobile elements (71) associated with said fixed element (70).

3. Steering column according to claim 2, characterised in that said path (85, 86) is disposed along a flat surface and is bordered by at least one edge (89) slanting with respect to said flat surface, thus constituting a guiding surface.

4. Steering column according to one of claims 2 or 3, characterised in that said mobile element (71) comprises at least one recess (95, 96) and the elastic means (72) comprises a tongue (105, 106) liable to be inserted in said recess (95, 96), this insertion making it possible to render integral the mobile element (71) with the elastic means (72) and to provide it with an accurate positioning with respect to said fixed element (70).

5. Steering column according to any one of claims 1 to 4 characterised in that at least one of the mobile elements (71) comprises at least one path (98, 99) extending in a direction substantially parallel to the direction of movement of the mobile portion (3) with respect to the fixed portion (2), and in that the elastic means (72) comprises at least one lug liable to slide on said path (98, 99).

6. Steering column according to any one of the preceding claims, characterised in that the fixing means (51, 52, 53, 54, 55) comprise a rod (51) extending in a direction (50) transverse to the column axis (10) by passing through openings (57, 58, 59, 60) of the fixed (2) and mobile (3) portions, tightening members (52, 53, 54) being disposed at each of the extremities of the rod (51) and allowing, when actuated, to tighten the lugs (21, 22) of the fixed portion (2) against the adjacent lugs (43, 44) of the mobile portion (3).

7. Steering column according to claim 6, characterised in that the openings (57, 58) of the fixed portion (2) have an elongated shape, the rod (51) sliding in said openings (57, 58) in the unlocked position, thus driving the mobile portion (3), and being immobilised in the locked position corresponding to intermeshing of the notched elements (70, 71).

8. Steering column according to one of claims 6 or 7, characterised in that the openings (59, 60) of the mobile portion (3) have an elongated shape.

9. Steering column according to any one of claims 6 to 8, characterised in that at least one of the mobile elements (71) is fixed to one of the extremities of the rod (51), the corresponding fixed element (70) and lug (21) of the fixed portion (2) being inserted between said mobile element (71) and one of the lugs (43) of the mobile portion (3).

10. Steering column according to claim 9, characterised in that the rod (51) is a screw and the tightening members comprise a nut (52), said nut (52) cooperating with the mobile element (71), with an antifriction means (73) interposed therebetween.

11. Steering column according to claim 10, characterised in that the antifriction means (73) is a washer, formed of or coated with an antifriction material, or a ball or needle bearing.

12. Steering column according to any one of claims 6 to 11, characterised in that the tightening members comprise a cam (53), a cam-follower (54) and an operating lever (55), disposed at one of the two extremities of the rod (51), the notched elements (70, 71) being disposed at the other extremity, the cam (53) and cam-follower (54) being adapted to cooperate under the action of the operating lever (55) so as to make the column move from the unlocked position to the locked position and vice versa.

13. Steering column according to any one of the preceding claims, characterised in that blocks (63, 64) are inserted between the adjacent lugs (21, 22, 43, 44) of the fixed (2) and mobile (3) portions.

14. Steering column according to any one of the preceding claims, characterised in that the vehicle is equipped with an inflatable air bag, which is activated should an impact occur and dampens the impact of the driver on the steering wheel and column.
